## Europäisches Patentamt

## European Patent Office

## Office européen des brevets

(11) Veröffentlichungsnummer: **0 036 148**
**B1**

(12) **EUROPÄISCHE PATENTSCHRIFT**

(45) Veröffentlichungstag der Patentschrift:
27.12.84

(21) Anmeldenummer: **81101658.3**

(22) Anmeldetag: **06.03.81**

(51) Int. Cl.³: **G 11 C 15/00**

(54) **Hybrid-Assoziativspeicher.**

(30) Priorität: **11.03.80 DE 3009317**

(43) Veröffentlichungstag der Anmeldung:
**23.09.81 Patentblatt 81/38**

(45) Bekanntmachung des Hinweises auf die Patenterteilung:
**27.12.84 Patentblatt 84/52**

(84) Benannte Vertragsstaaten:
**AT BE CH FR GB IT LI LU NL SE**

(56) Entgegenhaltungen:
**FR - A - 2 313 738**
**US - A - 3 648 254**

**PROCEEDINGS OF THE FALL JOINT COMPUTER CONFERENCE, 18-20 November 1969, AFIPS PRESS, Montvale, US, MELLIAR-SMITH: "A design for a fast computer for scientific calculations", Seiten 201-208**
**PROCEEDINGS OF THE IFIP CONGRESS, 5-10 August 1968, North-Holland, publ. comp., Amsterdam, NL, ASPINALL et al. "Associatire memories in large computer systems", Seiten 796-800**

(73) Patentinhaber: **Siemens Aktiengesellschaft, Berlin und München Wittelsbacherplatz 2, D-8000 München 2 (DE)**

(72) Erfinder: **Wolf, Gerhard, Ing.grad., Chopinstrasse 5, D-8000 München 60 (DE)**

ACTORUM AG

## Beschreibung

Die Erfindung betrifft einen Hybrid-Assoziativspeicher gemäss dem Oberbegriff des Patentanspruches 1. Derartige Speicher sind bereits bekannt, z.B. durch die DE-AS 2 525 287 oder durch «data report» 11 (1976), Heft 2, Seite 29 bis 34, insbesondere Seite 32.

Auch durch die US-PS 3 648 254 ist ein solcher Hybrid-Assoziativspeicher mit einem dreidimensionalen Massenspeicher als Basisspeicher bekannt, der aus Speicherelementen in Form von Halbleiterschieberegistern mit jeweils 256 Bit modulartig zusammengesetzt ist, wobei 16 Speicherelemente ein Modul bilden und wiederum 16 Module auf einer Speicherplatte untergebracht sind. 128 solcher Speicherplatten bilden dann den Speicher, wobei jeweils einander korrespondierende Bits aller Speicherplatten parallel für die Ein- oder Ausgabe eines 128-Bit-Datenwortes ansteuerbar sind.

Für den assoziativen Betrieb ist je Modul ein Vergleicher vorgesehen und es werden nach Auswahl jeweils eines Speicherelementes, also Registers, je Modul auf jeder Speicherplatte die 256 Bit in jedem ausgewählten Register nacheinander zusammen jeweils mit den entsprechenden Bits aller ausgewählten Register anhand eines bereitgestellten Vergleichswortes überprüft. Jeder Vergleicher entspricht daher einem Assoziationsfeld einer assoziativen Oberfläche mit einer der Anzahl der Speicherplatten entsprechenden Anzahl von Spalten und einer der Anzahl der Module je Speicherplatte entsprechenden Anzahl von Zeilen, so dass jeweils eine der Anzahl der Zeilen entsprechende Anzahl von Datenwörtern mit einer der Anzahl von Spalten entsprechenden Anzahl von Bitstellen gleichzeitig durch die assoziative Oberfläche überprüft werden kann.

Durch die Kombination einer assoziativen Oberfläche in Form einer assoziativen Matrix oder eines Assoziativspeichers mit einem nichtassoziativen konventionellen Speicher als Basisspeicher gelang es, eine Vervielfachung der Speicherkapazität mit nur sehr wenig mehr Anschlüssen zu erreichen. Um dabei die Leistung der assoziativen Oberfläche voll nutzen zu können, sind für den Basisspeicher Speicherbausteine erforderlich, deren Zykluszeit die für die assoziative Oberfläche notwendige Datenrate zulässt. Da aber die Speicherkapazität bei Verwendung entsprechend schneller Speicherbausteine aus Kostengründen beschränkt ist, ist zwangsläufig auch die Speicherkapazität des Hybrid-Assoziativspeichers begrenzt.

Aufgabe der Erfindung ist es daher, einen Hybrid-Assoziativspeicher der eingangs genannten Art zu schaffen, bei dem trotz Verwendung von kostengünstigeren, aber langsameren Speicherbausteinen die Speicherkapazität ohne wesentliche Herabsetzung der Datenrate und die Leistungsfähigkeit durch zusätzliche Steuerungs- und Sicherungsmassnahmen erhöht werden kann.

Diese Aufgabe wird durch die kennzeichnenden Merkmale des Patentanspruches 1 gelöst.

Statt eines einzigen Basisspeichers werden also mehrere Teilspeicher als Basisspeicher verwendet, die mit zeitlich überlappenden Lesezyklen arbeiten, wobei die Durchschalteeinheit die Verbindung mit der assoziativen Oberfläche herstellt. Durch diesen Aufbau des Hybrid-Assoziativspeichers und dessen internen Steuerungsablauf werden längere Zykluszeiten der verwendeten Speicherbausteine überspielt und auch durch das Ausbleiben von Treffern bedingte interne Totzeiten verringert.

Zweckmässig sind die Anzahl der Teilspeicher und die Arbeitsgeschwindigkeiten von Assoziationsmatrix und Basisspeicher so aufeinander abgestimmt, dass die Assoziationsmatrix wenigstens jeweils eine Speichereinheit aller Teilspeicher pausenlos nacheinander überprüfen kann. Bei Verwendung von assoziativen Oberflächen mit einer Zykluszeit von 100 ns und Speicherbausteinen mit einer Zykluszeit von 400 ns sind also vier Teilspeicher erforderlich, die jeweils um 100 ns versetzt ihre Daten zur Verfügung stellen, so dass aus jedem Teilspeicher eine Speichereinheit pausenlos nacheinander verarbeitet werden kann.

Dabei sich noch ergebende Pausenzeiten für die assoziative Oberfläche können in Anlehnung an eine an sich bekannte Massnahme vermieden werden, wenn zwischen der Assoziationsmatrix und der Durchschalteeinrichtung eine gleichartig ausgebildete Speichereinheit als Oberflächenpuffer angeordnet ist, der zusammen mit der Assoziationsmatrix wie ein Assoziativspeicher arbeitet. Die einzelnen Teilspeicher können wegen der dabei nur kurzzeitigen Verbindung mit der als Oberflächenpuffer arbeitenden Speichereinheit den Lesezyklus für die nächstfolgende Speichereinheit so weitgehendst an den vorhergehenden Lesezyklus anschliessen.

Die Durchschalteeinrichtung besteht zweckmässig aus einer der Anzahl der Assoziationsfelder entsprechenden Anzahl von Multiplexern mit jeweils einer der Anzahl der Teilspeicher entsprechenden Anzahl von Einstellungen.

Eine weitere Steigerung der Leistungsfähigkeit lässt sich gemäss einer anderen Weiterbildung der Erfindung dadurch erreichen, dass das normale Lesen von Daten aus dem Basisspeicher ebenfalls über die Assoziationsmatrix in Verbindung mit der Zeilenauswahlschaltung der Assoziationsmatrix erfolgt, dass dagegen das Einschreiben von Daten in dem Basisspeicher unabhängig von der Assoziationsmatrix erfolgt. Damit ist im Gegensatz zu den bekannten Anordnungen ein direkter Zugriff zum Basisspeicher gegeben, so dass in Verbindung mit dem Oberflächenpuffer Schreibzyklen bereits eingeleitet werden können, wenn noch ein Lesevorgang läuft.

Zweckmässig ist für das Einschreiben grösserer Datenmengen aus einem Hintergrundspeicher ein gesonderter, schnell arbeitender Pufferspeicher mit der Kapazität wenigstens einer Speichereinheit vorgesehen, der zeilenweise geladen wird und der die für eine Speichereinheit des Basisspeicher bestimmten Zeilen gleichzeitig an diese übergibt. Durch das Aufsammeln der Daten im schnellen Ladepufferspeicher mit gleichzeitiger Übergabe der Daten für eine Speichereinheit verringert sich die Eingabedauer in dem Basisspeicher mit relativ langsamen Speicherbausteinen erheblich gegenüber der bei einer zeilenweise erfolgenden Übergabe.

Ein weiterer Vorteil ergibt sich in diesem Zusammenhang, wenn bei einem Pufferspeicher mit einer der Speicherkapazität mehrerer Speichereinheiten des Basisspeichers entsprechenden Kapazität und mit Unterteilung in entsprechend grosse Speichereinheiten Daten für verschiedene Speichereinheiten des Basisspeichers im Pufferspeicher durch Verteilen auf unterschiedliche Speichereinheiten entsprechend eingeordnet werden und eine Übergabe an den Basisspeicher erfolgt, wenn eine Speichereinheit im Pufferspeicher gefüllt ist.

Darüber hinaus lässt sich die Leistungsfähigkeit des Hybrid-Assoziativspeichers steigern, wenn gemäss einer anderen Weiterbildung der Erfindung zur Sicherung der Daten im Basisspeicher die Speicherabschnitte je Speichereinheit in Sicherungsgruppen unterteilt und innerhalb jeder Gruppe matrixförmig geordnet werden, wenn die Inhalte der so geordneten Speicherabschnitte vor ihrer Einspeicherung in den Basisspeicher einer Parity-Kreuzsicherung unterworfen werden, wenn die dabei gewonnenen Sicherungsdaten ebenfalls im Basisspeicher gespeichert werden und wenn die aus dem Basisspeicher gelesenen Daten vor Übergabe an die assoziative Oberfläche anhand der Sicherungsdaten überprüft und so weit möglich korrigiert werden.

Die Gefahr, dass sich bei dem Umfang der gleichzeitig bewegten Daten Fehler einstellen, wird dadurch herabgesetzt und der Aufwand im Vergleich zu den sonst üblichen Verfahren mit regenerierenden Codes wesentlich verringert. Vorteilhaft bilden jeweils die eine Zeile bildenden Speicherabschnitte eine Sicherungsgruppe, und es werden die jeweils gewonnenen Sicherungsdaten jeweils der zugehörigen Zeile hinzugefügt. Zur Korrektur von Einzelfehlern wird lediglich der Inhalt der durch die Sicherungsdaten eindeutig als gestört erkannten Speicherabschnitte invertiert.

Weitere Einzelheiten der Erfindung seien nachfolgend anhand der Zeichnungen näher erläutert. Im einzelnen zeigen:

Fig. 1 das Blockschaltbild eines Hybrid-Assoziativspeichers gemäss der Erfindung in schematischer Darstellung,

Fig. 2 und Fig. 3 Zeitdiagramme zur Erläuterung des Zusammenarbeitens zwischen Basisspeicher und Assoziationsmatrix ohne und mit Oberflächenpuffer für einen Hybrid-Assoziativspeicher gemäss dem Stand der Technik,

Fig. 4 und Fig. 5 Zeitdiagramme zur Erläuterung des Zusammenarbeitens zwischen Basisspeicher und Assoziationsmatrix ohne und mit Oberflächenpuffer für einen Hybrid-Assoziativspeicher gemäss Fig. 1,

Fig. 6 in Anlehnung an Fig. 1 den schematischen Aufbau der Einrichtung zur Sicherung der Daten im Basisspeicher,

Fig. 7 die Anordnung der Speicherabschnitte einer Zeile zur Ableitung der Sicherungsdaten bei der Kreuzsicherung und

Fig. 8 in Anlehnung an Fig. 1 den schematischen Aufbau der Einrichtung zur Prüfung und Korrektur der Daten aus dem Basisspeicher.

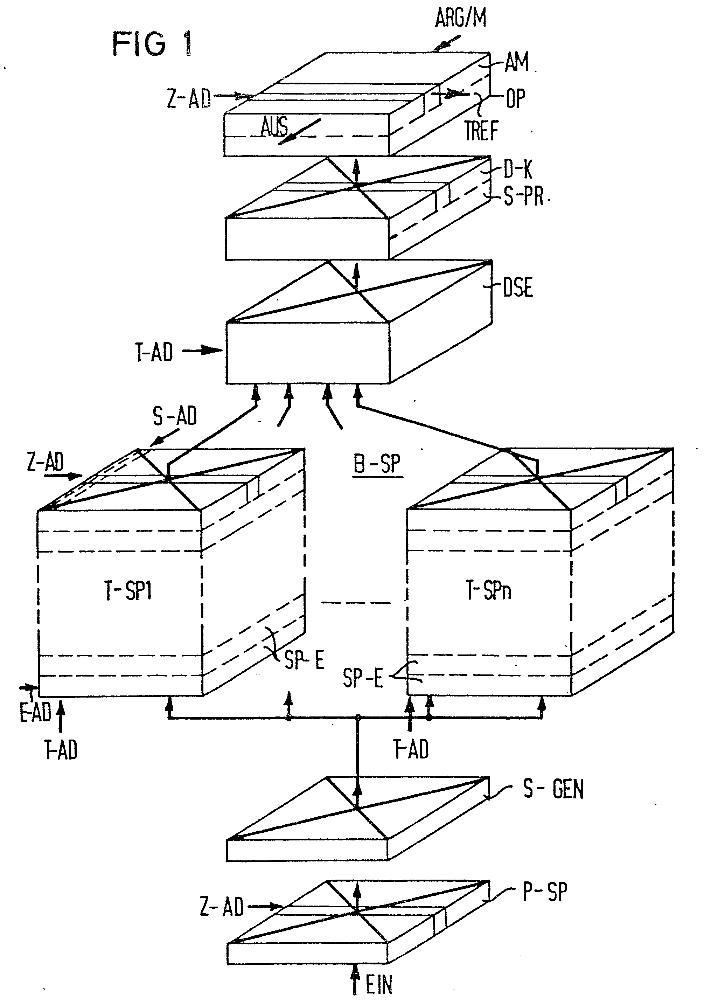

Der in Fig. 1 gezeigte schematische Aufbau des Hybrid-Assoziativspeichers gemäss der Erfindung gliedert sich von unten nach oben in einen Pufferspeicher P-SP zum Einschreiben von Daten, eine Einrichtung S-GEN zur Sicherung der Daten, den aus den Teilspeichern T-SP1 bis T-SPn bestehenden Basisspeicher B-SP, die gemeinsame Durchschalteeinrichtung DSE, eine Einrichtung S-PR zur Prüfung der gelesenen Daten mit einer nachgeschalteten Einrichtung D-K zur Korrektur fehlerhafter Daten, eine als Oberflächenpuffer OP wirkende Speichereinheit und die Assoziationsmatrix AM.

Die Assoziationsmatrix AM besteht in an sich bekannter Weise aus Gruppen zeilenweise angeordneter Vergleicher für jeweils ein Bit, die zeilenweise durch eine Zeilenauswahlschaltung gelesen werden können bzw. spaltenweise über die gesamte Zeilenbreite beliebig maskierbar sind. Dabei wird bei jeder Ansteuerung ein durch die Makse freigegebenes Bit des Suchargumentes mit einem Datenbit aus dem Basisspeicher verglichen. Stimmen alle innerhalb einer Zeile miteinander verglichenen Bits überein, so wird ein Treffer gemeldet und die zugehörige Speicherzeile ausgelesen. Der Aufbau derartiger Assoziationsmatrizen ist allgemein bekannt. In der Zeichnung wurde daher auf die Darstellung der zusätzlich benötigten Bauteile verzichtet und stattdessen nur Pfeile eingesetzt, die auf diese Bauteile hinweisen. Es handelt sich dabei um die Zeilenauswahl anhand einer Zeilenadresse Z-AD, die Bereitstellung des Suchargumentes ARG und die Maskierung M sowie die Auswertung der Treffer TREF und die Ausgabe AUS für die Daten einer Zeile.

Die Assoziationsmatrix AM besteht beispielsweise aus 32 Zeilen mit jeweils 8 Byte zu je 8 Bit, so dass insgesamt 256 Byte oder 2048 Bit assoziativ erfasst werden. Diese Bit müssen alle gleichzeitig der Assoziationsmatrix AM aus dem Basisspeicher B-SP zur Verfügung gestellt werden.

Mit der Assoziationsmatrix AM ist eine entsprechend organisierte Speichereinheit als Oberflächenpuffer für entsprechend viele Datenbit gekoppelt, der zusammen mit der Assoziationsmatrix AM wie ein konventioneller Assoziativspeicher arbeitet, allerdings mit dem Unterschied, dass ein paralleler Zugang zu allen einzelnen Speicherzeilen vorgesehen ist. Assoziationsmatrix AM und Oberflächenpuffer OP lassen sich integriert durch eine Reihe gleichartiger LSI-Bausteine, beispielsweise für jeweils 16 assoziative Bitstellen, realisieren.

Neben der assoziativen Oberfläche, bestehend aus der Assoziationsmatrix AM und dem Oberflächenpuffer OP, ist der Basisspeicher B-SP wesentlicher Bestandteil des Hybrid-Assoziativspeichers. Dieser Basisspeicher gliedert sich in mehrere selbständige Teilspeicher T-SP1 bis T-SPn. Diese Teilspeicher T-SP... bestehen jeweils in Etagen übereinander geschichteten Speichereinheiten PS-E, die jeweils analog dem Oberflächenpuffer OP der assoziativen Oberfläche organisiert sind, d.h. diese Speichereinheiten weisen bei gleicher matrixförmiger Anordnung je Bit einen Speicherabschnitt auf, so dass jeweils ein Speicherabschnitt in jeder Speichereinheit SP-E miteinander korrespondiert und alle diese miteinander korrespondierenden Speicherabschnitte zum selben Assoziationsfeld der assoziativen Oberfläche durchschaltbar sind. Den vielfältigen Betriebsbedingungen des Assoziativspeichers entsprechend sind mit den einzelnen Teilspeichern T-SP... Auswahlschaltmittel zur Auswahl jeweils einer der Speichereinheiten SP-E, für die einzelnen Zeilen und auch für die einzelnen Spalten innerhalb jeder Speichereinheit SP-E vorgesehen. Derartige Auswahlschaltmittel in Verbindung mit dreidimensionalen Speichern sind allgemein bekannt und daher nicht gesondert dargestellt. Stattdessen sind die dadurch gegebenen Auswahlmöglichkeiten lediglich durch Adressenpfeile angedeutet, nämlich für die Speichereinheiten die Auswahl durch die Adresse E-AD, für die Zeilen durch die Adresse Z-AD und für die Spalten durch die Adresse S-AD. Darüberhinaus ist eine Auswahlschaltung für die Auswahl der einzelnen Teilspeicher T-SP1 erforderlich, was durch die Adressenpfeile T-AD angedeutet ist.

Die einzelnen Teilspeicher T-SP... werden in an sich bekannter Weise aus Speicherbausteinen zusammengesetzt. Für die Realisierung von sehr grossen Speicherkapazitäten im Megabyte-Bereich sind das zur Zeit langsamere MOS-Speicherbausteine, etwa bis zu 64 k-Bit und mit einer Zykluszeit von 200 bis 500 ns.

Die Verbindung der einzelnen Teilspeicher T-SP1 bis T-SPn des Basisspeichers B-SP mit der assoziativen Oberfläche wird durch die Durchschalteeinrichtung DSE hergestellt. Dabei werden jeweils die Informationen einer gesamten Speichereinheit SP-E aus dem Basisspeicher B-SP zur assoziativen Oberfläche, d.h. zum Oberflächenspeicher OP, übertragen und dort zwischengespeichert. Gemäss dem gewählten Beispiel werden also 2048 Bitstellen-Verbindungen jeweils gleichzeitig hergestellt, was durch die kreuzweise angeordneten Datenflusspfeile der einzelnen Bausteine angezeigt ist. Die Durchschalteeinrichtung DSE kann daher aus 2048 Einzelmultiplexern bestehen, die ebenfalls matrixförmig angeordnet sind und jeweils eine der Anzahl der Teilspeicher T-SP... entsprechende Anzahl von Einstellungen aufweisen. Die Auswahl dieser Einstellungen erfolgt analog der Auswahl der Teilspeicher T-SP... anhand der zugehörigen Adresse T-AD. Auch derartige Multiplexerbausteine in integrierter Schaltkreistechnik sind allgemein bekannt.

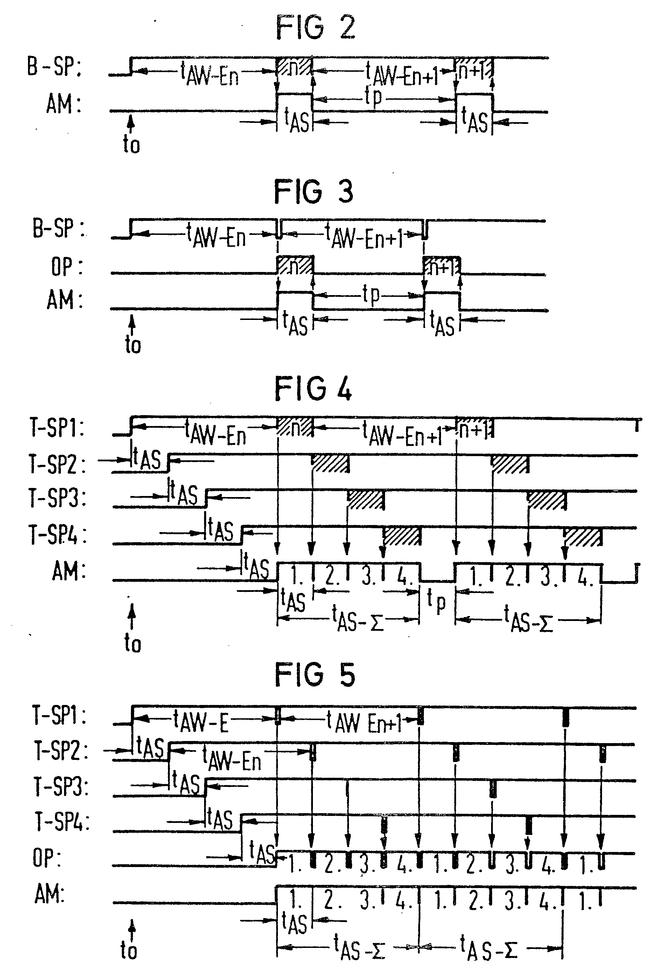

Da voraussetzungsgemäss die Zykluszeit für die assoziative Oberfläche wesentlich kleiner ist als die Zykluszeit des Basisspeichers, sind bestimmte Zeitbedingungen einzuhalten, damit die für die Assoziation benötigten Daten aus dem Basisspeicher jeweils rechtzeitig zur Verfügung gestellt werden können. Zur Veranschaulichung dieser Zusammenhänge sei zunächst auf die Zeitdiagramme der Figuren 2 bis 5 Bezug genommen. Die Zeitdiagramme von Fig. 2 und Fig. 3 beziehen sich dabei auf die Verhältnisse bei den bisher bekannten Hybrid-Assoziativspeichern und die von Fig. 4 und 5 auf die Verhältnisse beim Hybrid-Assoziativspeicher gemäss der Erfindung.

Fig. 2 zeigt in Gegenüberstellung die Zyklusfolge des Basisspeichers B-SP und der assoziativen Matrix AM. Beginnt der Speicherzyklus zum Zeitpunkt $t_0$, so steht der Speicherinhalt der angesteuerten Speichereinheit En erst nach Ablauf der Zykluszeit $t_{AW}$ für die Bearbeitung durch die Assoziationsmatrix AM zur Verfügung. Anschliessend muss der gelesene Speicherinhalt für die Zykluszeit $t_{AS}$ der Assoziationsmatrix infolge Fehlens eines Oberflächenpuffers zur Verfügung bleiben, so dass erst mit Ende des Arbeitszyklus für die Assoziationsmatrix der Lesezyklus für die nächstfolgende Speichereinheit En + 1 eingeleitet werden kann. Da für die Bereitstellung des Speicherinhaltes dieser neuen Speichereinheit wiederum der volle Speicherzyklus $t_{AW}$ erforderlich ist, ergibt sich daraus eine entsprechend grosse Pausenzeit $t_P$ für die Assoziationsmatrix AM. Die Geschwindigkeit der Assoziationsmatrix AM kann daher nicht befriedigend genutzt werden.

Bei Verwendung eines zusätzlichen Oberflächenpuffers OP gemäss Fig. 3 verkürzt sich die Pausenzeit $t_P$ zwischen zwei aufeinanderfolgenden Zyklen der Assoziationsmatrix AM annähernd um die Zykluszeit $t_{AS}$ der Assoziationsmatrix, da am Ende eines Lesezyklus für den Basisspeicher B-SP die gelesene Information nur solange zur Verfügung gestellt werden muss, bis sie der Oberflächenpuffer OP übernommen hat. Der Zyklus für das Lesen der nachfolgenden Speichereinheit En + 1 kann daher entsprechend früher gestartet werden, was letztendlich zur Verkürzung der Pausenzeit $t_P$ führt.

Ganz anders gestalten sich die Verhältnisse bei dem Hybrid-Assoziationsspeicher gemäss der Erfindung. Dabei sei unterstellt, dass insgesamt vier Teilspeicher T-SP1 bis T-SP4 als Basisspeicher vorgesehen sind und dass die Zykluszeiten $t_{AW}$ für die einzelnen Teilspeicher viermal so gross sind wie die Zykluszeit $t_{AS}$ für die Assoziationsmatrix AM. Wird gemäss dem Beispiel von Fig. 4 der Lesezyklus für das Lesen der Einheit En zum Zeitpunkt $t_0$ gestartet, so steht der gelesene Speicherinhalt wiederum nach Ablauf der Zykluszeit $t_{AW}$ für die Assoziationsmatrix AM zur Verfügung und infolge Fehlens des Oberflächenpuffers kann der Lesezyklus für die darauffolgende Speichereinheit En + 1 erst mit Ende des Arbeitszyklusses für die Assoziationsmatrix gestartet werden. Startet man nun den Lesezyklus für den Teilspeicher T-SP2 um die Zykluszeit $t_{AS}$ der Assoziationsmatrix AM gegenüber dem Lesezyklus für den Teilspeicher T-SP1 verzögert, so steht der aus dem Teilspeicher T-SP2 gelesene Speicherinhalt zeitgerecht am Ende des ersten Arbeitszyklus der Assoziationsmatrix AM zur Verfügung, so dass diese ohne Pause weiter arbeiten kann. Werden demzufolge die Lesezyklen der übrigen Teilspeicher T-SP3 und T-SP4 ebenfalls um die Zykluszeit $t_{AS}$ der Assoziationsmatrix AM verzögert gestartet, so können die Speicherinhalte von vier verschiedenen Speichereinheiten pausenlos aufeinanderfolgend von der Assoziationsmatrix AM verarbeitet werden. Lediglich im Anschluss daran entsteht eine Pause $t_P$ von der Dauer einer Zykluszeit $t_{AS}$, da innerhalb eines Teilspeichers, z.B. T-SP1, die einzelnen Lesezyklen wegen des fehlenden Oberflächenpuffers OP nicht unterbrechungslos aufeinanderfolgen können. Ein Vergleich der Verhältnisse von Fig. 4 mit denen von Fig. 2 oder Fig. 3 jedoch zeigt, dass sich die Pausenzeit $t_P$ für die Assoziationsmatrix AM durch die Aufteilung des Basisspeichers B-SP in mehrere Teilspeicher T-SP... unter Berücksichtigung der gegebenen Zykluszeiten wesentlich verringern lässt.

Sieht man ausserdem analog zum Beispiel gemäss Fig. 3 einen Oberflächenpuffer OP vor, so entfällt auch diese Pausenzeit, wie Fig. 5 zeigt, weitgehend, da die Lesezyklen innerhalb der einzelnen Teilspeicher nur mit kurzen Unterbrechungen für die Übergabe der Speicherinhalte an den Oberflächenpuffer OP aneinandergereiht werden können. Dagegen wäre der Oberflächenpuffer entbehrlich, wenn die Zykluszeit der assoziativen Oberfläche gleich dem (1/n-1)-fachen der Speicherzykluszeit bei n Teilspeichern gewählt werden kann.

Trotz Verwendung von Speicherbausteinen mit im Vergleich zur assoziativen Oberfläche relativ langen Zykluszeiten für den Basisspeicher B-SP kann also die Datenrate zur Versorgung der Assoziationsmatrix AM aus dem Basisspeicher B-SP trotz der schnelleren Zykluszeit aufrechterhalten werden, wenn der Basisspeicher in mehrere Teilspeicher T-SP... untergliedert wird, die überlappend und entsprechend voreilend arbeiten. Das zeitgerechte Arbeiten der einzelnen Teilspeicher T-SP... kann dadurch sichergestellt werden, dass die Teilspeicheradresse T-AD und die Adresse E-AD für die jeweilige Speichereinheit SP-E entsprechend phasenverzögert den einzelnen Teilspeichern zur Verfügung gestellt wird, oder dass die Adresse E-AD für die einander korrespondierenden Speichereinheiten SP-E in den einzelnen Teilspeichern T-SP... jeweils nur dem Eingangsadressenregister des ersten Teilspeichers T-SP1 zur Verfügung gestellt wird und dass dann diese Adresse zeitgerecht an Adressenregister der nachfolgenden Teilspeicher weitergeleitet wird. Die Koordinierung der erforderlichen einzelnen Takte für die Durchschalteeinrichtung DSE und den Basisspeicher B-SP wie auch für die übrigen Baugruppen kann in einfacher und an sich bekannter Weise durch einen zentralen Taktgenerator sichergestellt werden.

Assoziationsvorgänge durch die Assoziationsmatrix AM werden also durch fortlaufende Auswahl von Speichereinheiten SP-E anhand der Teiladressen T-AD zur Kennzeichnung des jeweiligen Teilspeichers T-SP... und E-AD zur Kennzeichnung der jeweiligen Speichereinheit SP-E sowie durch Übergabe der in den gelesenen Speichereinheiten enthaltenen Daten über die Durchschalteeinrichtung DSE zum Oberflächenpuffer OP der assoziativen Oberfläche abgewickelt. In analoger Weise erfolgt auch das gezielte Lesen von Daten aus dem Basisspeicher B-SP, indem zunächst die zugehörige Speichereinheit SP-E in einem der Teilspeicher T-SP... adressiert und über die Durchschalteeinrichtung DSE der Assoziationsoberfläche zur Verfügung gestellt wird und indem dann anhand der eingestellten Zeilenadresse Z-AD unter Ausschaltung des Assoziationsvorganges die Daten der ausgewählten Zeile ausgelesen werden. Demgegenüber werden Daten unabhängig von der Assoziationsmatrix in den Basisspeicher B-SP eingegeben. Hierin besteht ein weiterer wesentlicher Unterschied des in Fig. 1 dargestellten Hybridassoziativspeichers gegenüber den bekannten Ausführungsformen. Dabei sind zwei Einzelfälle zu unterscheiden, nämlich das Einspeichern von Daten für eine gesamte Speichereinheit oder aber nur für eine einzige Zeile bzw. Spalte innerhalb einer Speichereinheit.

Das Übertragen von Daten für eine oder mehrere vollständige Speichereinheiten Sp-E erfolgt bezogen auf Fig. 1 mit dem im unteren Teil vorgesehenen Pufferspeicher P-SP, in den — gesteuert durch eine Zeilenauswahl, angedeutet durch den Adressenfall Z-AD, oder aber auch durch eine zusätzliche, im einzelnen nicht angedeutete Spaltenauswahl — die Daten zunächst zeilen- bzw. spaltenweise übernommen werden. Ist der Pufferspeicher P-SP auf diese Weise gefüllt, wird anhand der Teiladressen T-AD und E-AD die Speichereinheit SP-E im Basisspeicher B-SP ausgewählt, in die der Dateninhalt des Pufferspeichers P-SP übertragen werden soll. Das Aufsammeln der Daten im Pufferspeicher P-SP hat zunächst den Vorteil, dass nicht alle Zeilen bzw. Spalten von Daten an den Basisspeicher B-SP einzeln übergeben werden müssen und damit die Übergabe wegen der relativ langsamen Arbeitsgeschwindigkeit des Basisspeichers zu viel Zeit beansprucht. Die Übergabezeit wird vielmehr auf die Dauer eines einzigen Speicherzyklus reduziert, wenn für den Pufferspeicher P-SP analog wie für den Oberflächenpuffer OP schnell arbeitende Bausteine verwendet werden. Darüber hinaus bietet der Pufferspeicher P-SP den Vorteil, dass bereits Daten zur Übergabe in den Basisspeicher B-SP aufgesammelt werden können, wenn der Basisspeicher infolge Zusammenarbeit mit der assoziativen Oberfläche noch nicht zur Verfügung steht. Durch Ausdehnen der Speicherkapazität des Pufferspeichers P-SP auf die Speicherkapazität von mehreren Speichereinheiten SP-E des Basisspeichers B-SP besteht weiterhin die Möglichkeit, für verschiedene Speichereinheiten SP-E im Basisspeicher bestimmte Daten vorab im Pufferspeicher so einzuordnen, dass sie nach dem Aufsammeln den zugeordneten Speichereinheiten SP-E in grösseren Gruppen parallel übergeben werden können. Die Übergabe an den Basisspeicher erfolgt in diesem Falle vorzugsweise, wenn eine der Speichereinheiten des Pufferspeichers P-SP aufgefüllt ist. Damit besteht die Möglichkeit, grosse Mengen von Daten, beispielsweise aus einem Hintergrundspeicher, in kurzer Zeit an den Basisspeicher B-SP zu übergeben.

Im Gegensatz dazu steht das Einschreiben einzelner Zeilen oder Spalten in den Basisspeicher B-SP. Auch hierzu kann der Pufferspeicher P-SP verwendet werden, wenn einerseits die Eingabe einer Datenzeile unter der zugehörigen Zeilenadresse Z-AD erfolgt, was durch eine Zeilenauswahlschaltung des Pufferspeichers sichergestellt werden kann, und wenn andererseits eine Schreib-Inhibitsteuerung am Pufferspeicher B-SP vorgesehen ist, die sicherstellt, dass lediglich die an den Basisspeicher zu übergebende Zeile freigegeben wird, während alle übrigen Zeilen gesperrt bleiben, damit bei der Übergabe in die zugehörige Speichereinheit SP-E des Basisspeichers B-SP die nicht zu ändernden Datenzeilen unbeeinträchtigt und die darin enthaltenen Daten aufrechterhalten bleiben.

Eine andere Möglichkeit zur Übergabe einzelner Datenzeilen in eine vorbestimmte Speichereinheit des Basisspeichers besteht in der direkten Dateneingabe in den Basisspeicher bei vorheriger Auswahl des Teilspeichers T-SP..., der zugehörigen Speichereinheit SP-E und der entsprechenden Zeile oder Spalte in dieser Einheit.

Bisher nicht beschrieben wurden die in Fig. 1 weiterhin gezeigten Einrichtungen S-GEN, S-PR und D-K. Diese Einrichtungen dienen der Datensicherung, um die Effektivität des Hybrid-Assoziativspeichers zu vergrössern, da bei der Vielzahl von gleichzeitig zu übertragenden Datenbits und der Grösse des zu sichernden Basisspeichers B-SP Fehler einfach nicht ausgeschlossen werden können. Allerdings konnten die für Primärspeicher vergleichbarer Grössenordnung heute meistens verwendeten Sicherungsverfahren mit regenerierenden Codes nicht ohne weiteres übernommen werden, da der Aufwand hierfür viel zu gross wäre. Zurückgegriffen wurde daher auf die an sich bekannte Parity-Kreuzsicherung. Jedoch werden nicht die Speicherbits einer Speichereinheit insgesamt der Kreuzsicherung zugrundegelegt, sondern die einzelnen Speicherzellen werden in einzelne Sicherungsgruppen aufgeteilt und einzeln der Kreuzsicherung unterworfen. Auf diese Weise steht einerseits der zusätzliche Speicheraufwand für die Sicherungsdaten in einem annehmbaren Verhältnis zum Speicheraufwand für die Nutzdaten, und zum anderen lassen sich bei Teiländerungen der Daten innerhalb einer Speichereinheit die neuen Sicherungsdaten leichter gewinnen.

Gemäss dem gewählten Ausführungsbeispiel bilden jeweils acht Byte zu je acht Bit eine Speicherzeile. Unterstellt man des weiteren, dass die meisten Änderungen zeilenweise erfolgen, so bieten sich die Bit einer Zeile als Sicherungsgruppe an, wobei bei entsprechend günstiger Zuordnung der einzelnen Bit einer solchen Zeile sich zwei zusätzliche Sicherungswörter mit ebenfalls acht Bit je Wort ergeben. Das entspricht einem zusätzlichen Speicheraufwand von 25% der Nutzdatenkapazität, ein Aufwand, der in Anbetracht der assoziativen Leistung der Oberfläche ohne weiteres tragbar erscheint.

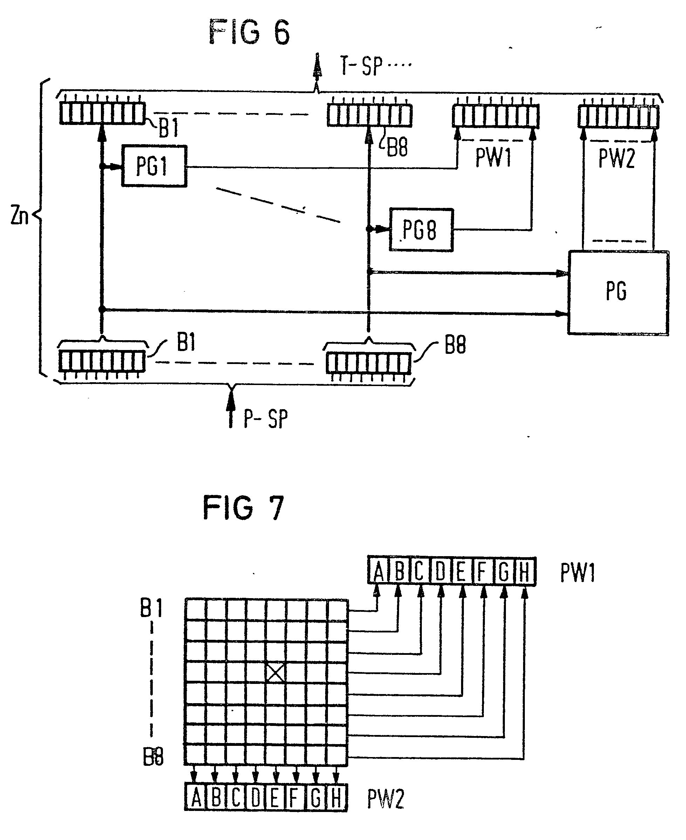

Fig. 6 zeigt den Aufbau der Einrichtung S-GEN für die Sicherung der in den Basisspeicher B-SP zu übergebenden Daten für eine Zeile Zn. Innerhalb der Einrichtung S-GEN wiederholt sich der gezeigte Aufwand für die Erzeugung der Sicherungswörter PW1 und PW2 bei jeder Zeile. Dieser Aufwand besteht aus jeweils einem Paritybitgenerator PG1 bis PG8 für jedes der eine Zeile bildenden Bytes B1 bis B8, die vom Pufferspeicher P-SP zur Verfügung gestellt werden. Zusätzlich ist ein weiterer Paritybitgenerator PG vorgesehen, der die korrespondierenden Bits der einzelnen Bytes B1 bis B8 miteinander verknüpft und das Sicherungswort PW2 liefert.

Die Anordnung der jeweils eine Zeile bildenden Bytes B1 bis B8 zu einer Sicherungsmatrix ist in Fig. 7 gezeigt. Dabei ergeben sich die beiden Sicherungswörter PW1 und PW2 in an sich bekannter Weise durch Bilden der Paritybits je Zeile und Spalte.

Die Ableitung der einzelnen Sicherungswörter PW1 und PW2 erfolgt vorzugsweise durch Parallelverknüpfung, so dass die erforderlichen Sicherungswörter ohne wesentlichen Zeitverzug beim Durchlaufen der Sicherungseinrichtung S-GEN bereitgestellt und zusammen mit den zu übertragenden Nutzdaten an den zuständigen Teilspeicher T-SP... weitergeleitet werden können.

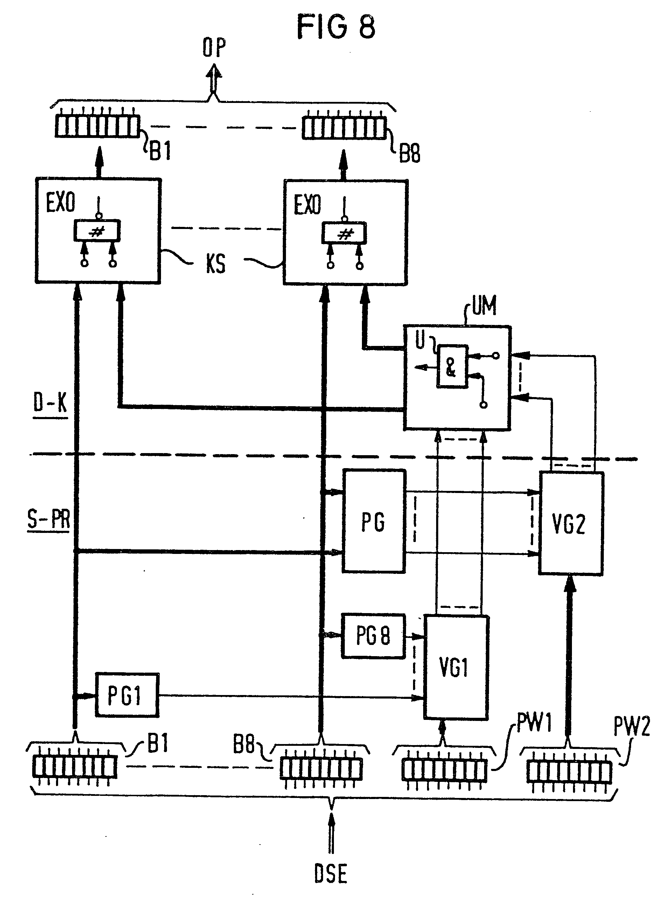

Fig. 8 zeigt den Aufbau der Einrichtung S-PR zur Überprüfung der vom Basisspeicher B-SP über die Durchschalteeinrichtung DSE bereitgestellten Nutzdaten anhand der mitgeführten Sicherungsdaten und der Datenkorrekturschaltung D-K für die Korrektur etwaiger Datenfehler. Auch hierbei bezieht sich die Darstellung wiederum auf eine Datenzeile. Der Aufbau der Prüfeinrichtung S-PR entspricht weitgehend der der Einrichtung S-GEN. Je Datenwort B1 bis B8 ist je ein Paritybitgenerator PG1 bis PG8 vorgesehen, während der Paritzeichengenerator PG der Verknüpfung der einander entsprechenden Bits in den einzelnen Datenwörtern dient. Die von den Paritybitgeneratoren PG1 bis PG8 erzeugten und das Sicherungswort PW1 bildenden Paritybits werden im Vergleicher VG1 mit dem mitgeführten Sicherungswort PW1 verglichen. Analoges gilt mit Bezug auf den Vergleicher VG2 für das zweite Sicherungswort PW2. In den beiden Vergleichern VG1 und VG2 werden die Bits der einzelnen Sicherungswörter paarweise miteinander verglichen. Besteht in jedem Falle Übereinstimmung als Zeichen dafür, dass kein Fehler vorliegt, so bleiben die Ausgangssignale dieser Vergleicher zur Einrichtung D-K ohne Auswirkung.

Im Fehlerfalle jedoch werden die entsprechenden Bitstellen markiert und von der Einrichtung UM in der Einrichtung D-K zur Fehlerkorrektur ausgewertet. Die Einrichtung UM besteht aus einer der Anzahl der die Sicherungsmatrix bildenden Bitstellen entsprechenden Anzahl von UND-Gliedern U, die gegebenenfalls in gleicher Weise matrixförmig angeordnet sein können. Dabei wird jeweils ein Signal des Vergleichers V1 mit jeweils einem Signal des Vergleichers VG2 verglichen. Besteht z.B. mit Bezug auf Fig. 7 bezüglich des Bit D im Sicherungswort PW1 und beim Bit E im Sicherungswort PW2 eine Ungleichheit, so kann bei Einzelfehlern eindeutig auf eine Störung des fünften Bits im Datenwort B4 geschlossen werden. Zur Korrektur werden daher in der Einrichtung D-K die Ausgangssignale der Einrichtung UM bitweise in den Korrekturschaltungen KS mit den einzelnen Bits der von der Durchschalteeinrichtung DSE zugeführten Datenwörter B1 bis B8 verknüpft. Hierzu dient je Bit ein exklusives ODER-Glied, wodurch ein verfälschtes Bitsignal invertiert und damit korrigiert wird. Auch die in den Einrichtungen S-PR und D-K vorgesehenen Schaltungen arbeiten parallel und damit fast verzögerungsfrei, so dass die zugeführten Nutzdaten B1 bis B8 diese Einrichtungen fast verzögerungsfrei durchlaufen und damit für die assoziative Oberfläche zur Verfügung stehen.

Insgesamt ergibt sich somit ein sehr leistungsfähiger Hybrid-Assoziativspeicher, der vielfältig einsetzbar ist und dessen einzelne Baueinheiten aus entsprechend geeigneten Einzelbausteinen in integrierter Schaltkreistechnik zusammengesetzt werden können.

**Patentansprüche**

1. Hybrid-Assoziativspeicher, bestehend aus einer eine Vielzahl von Assoziationsfeldern, z.B. in Form von Vergleichern für jeweils ein Bit, aufweisenden Assoziationsmatrix (AM) als assoziative Oberfläche und einem eine Vielzahl von Speichereinheiten (SP-E) aufweisenden, nichtassoziativen Basisspeicher (B-SP), wobei die Speichereinheiten jeweils analog der Assoziationsmatrix aus den Assoziationsfeldern entsprechenden Speicherabschnitten, z.B. für jeweils ein Bit, zusammengesetzt sind, so dass jeweils ein Speicherabschnitt aus jeder Speichereinheit mit demselben Assoziationsfeld der Assoziationsmatrix korrespondiert und der Inhalt aller Speicherabschnitte einer Speichereinheit zu den zugehörigen Assoziationsfeldern der Assoziationsmatrix gleichzeitig übertragbar ist, dadurch gekennzeichnet, dass die Speichereinheiten (Sp-E) des Basisspeichers (B-SP) zu Gruppen zusammengefasst sind und jede Gruppe einen Teilspeicher (z.B. T-SP1) bildet, dass zwischen der Assoziationsmatrix (AM) und dem Basisspeicher (B-SP) eine Durchschalteeinrichtung (DSE) angeordnet ist, die die einzelnen Teilspeicher (T-SP1 bis T-SP4) mit der Assoziationsmatrix (AM) verbindet und dabei alle Speicherabschnitte einer ausgewählten Speichereinheit (SP-E) in einem der Teilspeicher (z.B. T-SP) gleichzeitig zur Assoziationsmatrix (AM) durchschaltet, dass nacheinander durchzuschaltende Speichereinheiten sich zyklisch auf die einzelnen Teilspeicher (T-SP1 bis T-SP4) verteilen und dass die Auswahl der nacheinander durchzuschaltenden Speichereinheiten (SP-E) der einzelnen Teilspeicher (T-SP...) zeitlich überlappend und jeweils so weit voreilend erfolgt, dass bei voller Ausnutzung der Arbeitsgeschwindigkeit der Assoziationsmatrix (AM) trotz Verwendung eines langsamer arbeitenden Basisspeichers (B-SP) die Speicherinhalte der ausgewählten Speichereinheiten (SP-E) rechtzeitig für die Durchschaltung zur Assoziationsmatrix (AM) bereitstehen.

2. Hybrid-Assoziativspeicher nach Anspruch 1, dadurch gekennzeichnet, dass die Anzahl der Teilspeicher (z.B. T-SP1 bis T-SP4) und die Arbeitsgeschwindigkeiten von Assoziationsmatrix (AM) und Basisspeicher (B-SP) so aufeinander abgestimmt sind, dass die Assoziationsmatrix (AM) wenigstens jeweils eine Speichereinheit (SP-E) aller Teilspeicher (T-SP1 bis T-SP4) pausenlos nacheinander überprüfen kann.

3. Hybrid-Assoziativspeicher nach Anspruch 1 oder 2, dadurch gekennzeichnet, dass zwischen der Assoziationsmatrix (AM) und der Durchschalteeinrichtung (DSE) eine gleichartig ausgebildete Speichereinheit als Oberflächenpuffer (OP) angeordnet ist, der zusammen mit der Assoziationsmatrix (AM) wie ein Assoziativspeicher arbeitet.

4. Hybrid-Assoziativspeicher nach einem der Ansprüche 1 bis 3, dadurch gekennzeichnet, dass die Durchschalteeinrichtung (DSE) aus einer der Anzahl der Assoziationsfelder entsprechenden Anzahl von Multiplexern mit jeweils einer der Anzahl der Teilspeicher (z.B. T-SP1 bis T-SP4) entsprechenden Anzahl (z.B. 4) von Einstellungen besteht.

5. Hybrid-Assoziativspeicher nach einem der Ansprüche 1 bis 4, dadurch gekennzeichnet, dass das normale Lesen von Daten aus dem Basisspeicher (B-SP) ohne Assoziation ebenfalls über die Assoziationsmatrix in Verbindung mit der Zeilenauswahlschaltung (Z-AD) der Assoziationsmatrix (AM) erfolgt, dass dagegen das Einschreiben von Daten in den Basisspeicher (B-SP) unabhängig von der Assoziationsmatrix (AM) erfolgt.

6. Hybrid-Assoziativspeicher nach Anspruch 5, dadurch gekennzeichnet, dass für das Einschreiben grösserer Datenmengen aus einem Hintergrundspeicher ein gesonderter, schnell arbeitender Pufferspeicher (P-SP) mit der Kapazität wenigstens einer Speichereinheit (SP-E) vorgesehen ist, der zeilenweise geladen wird und die für eine Speichereinheit (SP-E) des Basisspeichers (B-SP) bestimmten Zeilen gleichzeitig an diese übergibt.

7. Hybrid-Assoziativspeicher nach Anspruch 6, dadurch gekennzeichnet, dass bei einem Pufferspeicher (P-SP) mit einer der Speicherkapazität mehrerer Speichereinheiten (SP-E) des Basisspeichers (B-SP) entsprechenden Kapazität und mit Unterteilung in entsprechend grosse Speichereinheiten Daten für verschiedene Speichereinheiten (SP-E) des Basisspeichers (B-SP) im Pufferspeicher (P-SP) durch Verteilen auf unterschiedliche Speichereinheiten entsprechend eingeordnet werden und dass eine Übergabe an den Basisspeicher (B-SP) erfolgt, wenn eine Speichereinheit im Pufferspeicher (P-SP) gefüllt ist.

8. Hybrid-Assoziativspeicher nach einem der Ansprüche 1 bis 7, dadurch gekennzeichnet, dass zur Sicherung der Daten im Basisspeicher (B-SP) die Speicherabschnitte je Speichereinheit (SP-E) in Sicherungsgruppen unterteilt und innerhalb jeder Gruppe matrixförmig geordnet werden, dass die Inhalte der so geordneten Speicherabschnitte vor ihrer Einspeicherung in den Basisspeicher (B-SP) einer Parity-Kreuzsicherung (durch S-GEN) unterworfen werden, dass die dabei gewonnenen Sicherungsdaten (PW1, PW2) ebenfalls im Basisspeicher (B-SP) gespeichert werden und dass die aus dem Basisspeicher gelesenen Daten vor Übergabe an die assoziative Oberfläche (AM/OP) anhand der Sicherungsdaten (PW1, PW2) überprüft (durch S-PR) und soweit möglich korrigiert (durch D-K) werden.

9. Hybrid-Assoziativspeicher nach Anspruch 8, dadurch gekennzeichnet, dass jeweils die eine Zeile (Zn) bildenden Speicherabschnitte eine Sicherungsgruppe bilden und dass die jeweils gewonnenen Sicherungsdaten (PW1, PW2) jeweils der zugehörigen Zeile hinzugefügt werden.

10. Hybrid-Assoziativspeicher nach Anspruch 8 oder 9, dadurch gekennzeichnet, dass zur Korrektur von Einfachfehlern der Inhalt der durch die Sicherungsdaten (PW1, PW2) eindeutig als gestört erkannten Speicherabschnitte invertiert (durch KS) wird.

**Claims**

1. A hybrid associative store comprising an association matrix (AM) as an associative surface, having a plurality of association fields, e.g. in the form of comparators for one bit in each case, and comprising a non-associative base store (B-SP) having a plurality of storage units (SP-E), where the storage units each analogously to the associative matrix comprises storage sections, e.g. for one bit, corresponding to the association fields, so that one storage section of each storage unit respectively corresponds to the same association field of the association matrix and the contents of all storage sections of one storage unit can be simultaneously transmitted to the assigned association fields of the association matrix, characterised in that storage units (SP-E) of the base store (B-SP) are combined to form groups and each group forms a sub-store (e.g. T-SP1), that between the association matrix (AM) and the base store (B-SP), is arranged a switching device (TDSE) which connects the individual sub-stores (T-SP1 to T-SP4) to the association matrix (AM) and thereby simultaneously switches all storage sections of a selected storage unit (SP-E) in a sub-store (e.g. T-SP) to the association matrix (AM), that storage units, which are to be consecutively switched through, are cyclically distributed to the individual sub-stores (T-SP1 to T-SP4), and that the selection of the storage units (SP-E) of the individual sub-stores (T-SP...), which are to be consecutively switched through occurs in a time-overlapping fashion and respectively so far in advance that when the operating speed of the association matrix (AM) is fully exploited, in spite of the use of a base store (B-SP) which operates more slowly, the storage contents of the selected storage units (SP-E) are available for the through-connection to the association matrix (AM) in time.

2. A hybrid associative store as claimed in claim 1, characterised in that the number of the sub-stores (e.g. T-SP1 to T-SP4) and the operating speeds of the associative matrix (AM) and base store (B-SP) are matched to one another to be such that the association matrix (AM) can respectively check at least one storage unit (SP-E) of all sub-stores (T-SP1 to T-SP4) uninterruptedly one after another.

3. A hybrid associative store as claimed in claim 1 or 2, characterised in that between the association matrix (AM) and the switching device (DSE), there is arranged a similarly designed storage unit as a surface buffer (OP) which together with the association matrix (AM) operates like an associative store.

4. A hybrid associative store as claimed in one of claims 1 to 3, characterised in that the switching device (DSE) comprises a number of multiplexers which corresponds to the number of association fields, which multiplexers respectively have a number (e.g. 4) of settings which corresponds to the number of the substores (e.g. T-SP1 to T-SP4).

5. A hybrid associative store as claimed in one of claims 1 to 4, characterised in that the usual read-out of data from the base store (B-SP) without association is likewise effected via the association matrix in connection with the line selection circuit (Z-AD) of the association matrix (AM), whereas the write-in of data into the base store (B-SP) is effected independently of the association matrix (AM).

6. A hybrid associative store as claimed in claim 5, characterised in that for the write-in of larger data volumes from a secondary store, there is provided a separate, rapidly operating buffer store (P-SP) which has the capacity of at least one storage unit (SP-E) and which is loaded row-wise and simultaneously transfers the rows, which are determined for a storage unit (SP-E) of the base store (B-SP), to the storage unit (SP-E).

7. A hybrid associative store as claimed in claim 6, characterised in that in a buffer store (P-SP) with a capacity which corresponds to the storage capacity of a plurality of storage units (SP-E) of the base store (B-SP), and with a division into correspondingly large storage units, data for different storage units (SP-E) of the base store (B-SP) are correspondingly coordinated in the buffer store (P-SP) by distributing to different storage units, and that a transfer to the base store (B-SP) takes place if a storage unit in the buffer store (P-SP) is filled.

8. A hybrid associative store as claimed in one of claims 1 to 7, characterised in that in order to secure the data in the base store (B-SP) the storage sections are divided into safeguarding groups in each storage unit (SP-E) and arranged in the form of matrices within each group, that the contents of the storage sections, which are arranged in this manner, are subjected to a parity cross-check (through S-GEN) prior ot their storage into the base store (B-SP), that the safeguarding data (PW1, PW2), which is thereby obtained, is likewise stored in the base store (B-SP) and that prior to the transfer to the associative store (AM/ OP) with reference to the safeguarding data (PW1, PW2) the data read from the base store is checked (through S-PR) and corrected (through D-K) as far as possible.

9. A hybrid associative store as claimed in claim 8, characterised in that the storage sections forming a row (Zn) respectively form a safeguarding group and that the respectively obtained safeguarding data (PW1, PW2) are respectively added to the assigned row.

10. A hybrid associative store as claimed in claim 8 or 9, characterised in that in order to correct single errors the content of the storage sections, clearly recognised as being disturbed by the safeguarding data (PW1, PW2), is inverted (through KS).

**Revendications**

1. Mémoire associative hybride, constituée par une matrice d'association, en tant que surface associative, par exemple sous la forme de comparateurs pour respectivement un bit, et par une mémoire de base non associative (B-SP) comportant une pluralité d'unités de mémoire (SP-E), les unités de mémoire étant chacune respectivement constituée de façon analogue à la matrice d'association, par des sections de mémoire correspondant aux plages d'association, par exemple pour respectivement un bit, de manière qu'une section de mémoire de l'unité de mémoire corresponde à la même plage d'association de la matrice d'association, alors que le contenu de toutes les sections de mémoire d'une unité de mémoire est susceptible d'être transmis simultanément aux plages d'association correspondantes de la matrice d'association, caractérisée par le fait que les unités de mémoire (SP-E) de la mémoire de base (B-SP) sont rassemblées en groupes et que chaque groupe forme une mémoire partielle (par exemple T-SP1), qu'entre la matrice d'association (AM) et la mémoire de base (B-SP) est prévu un dispositif d'interconnexion (DSE) qui relie les différentes mémoires partielles (T-SP1 à T-SP4) à la matrice d'association et connecte, ce faisant, toutes les sections de mémoire d'une unité de mémoire choisie (SP-E) dans l'une des mémoires partielles (par exemple T-SP), simultanément avec la matrice d'association (AM), que des unités de mémoire à interconnecter successivement se répartissent cycliquement sur les différentes mémoires partielles (T-SP1 à T-SP4) et que le choix des unités de mémoire (SP-E) des différentes mémoires partielles (T-SP...), qui sont à interconnecter successivement, a lieu, avec chevauchement dans le temps et avec une avance telle qu'en utilisant complètement la vitesse de travail de la matrice d'association (AM) et malgré l'utilisation d'une mémoire de base (B-SP) opérant lentement, des contenus de mémoire des unités de mémoire (SP-E) choisies sont disponibles en temps utile pour leur transmission à la matrice d'association.

2. Mémoire associative hybride selon la revendication 1, caractérisée par le fait que le nombre de mémoires partielles (par exemple T-SP1 à T-SP4) et les vitesses de travail de la matrice d'association (AM) et de la mémoire de base (B-SP) sont accordées l'une à l'autre de telle façon que la matrice d'association (AM) peut contrôler successivement et sans interruption respectivement une unité de mémoire (SP-E) de toutes les mémoires partielles (T-SP1 à T-SP4).

3. Mémoire associative hybride selon la revendication 1 ou 2, caractérisée par le fait qu'entre la mémoire d'association (AM) et le dispositif d'interconnexion (DSE) est prévue une unité de mémoire réalisée de la même façon, en tant que mémoire-tampon à fonctionnement superficiel (OP) qui opère avec la matrice d'association (AM) comme une mémoire associative.

4. Mémoire associative hybride selon l'une des revendications 1 à 3, caractérisée par le fait que le dispositif d'interconnexion (DSE) est constitué par un nombre de multiplexeurs qui correspond au nombre de plages associées, et dont chacun possède un nombre de positions (par exemple 4) qui correspond au nombre des mémoires partielles (par exemple T-SP1 à T-SP4).

5. Mémoire associative hybride selon l'une des revendications 1 à 4, caractérisée par le fait que la lecture normale de données dans la mémoire de base (P-SP) a lieu, sans association, également par l'intermédiaire de la matrice d'association en liaison avec le circuit de sélection de ligne (Z-AD) de la matrice d'association (AM) que par contre l'écriture de données dans la mémoire de base (B-SP) a lieu indépendamment de la matrice d'association (AM).

6. Mémoire associative hybride selon la revendication 5, caractérisée par le fait que pour l'écriture de grandes quantités de données à partir d'une mémoire arrière-plan, il est prévu une mémoire-tampon (P-SP) distincte et opérant rapidement, avec la capacité d'au moins une unité de mémoire (SP-E), laquelle mémoire est chargée ligne par ligne et transmet en même temps les lignes qui sont destinées à l'unité de mémoire (SP-E) de la mémoire de base (B-SP), à cette dernière unité.

7. Mémoire associative hybride selon la revendication 6, caractérisée par le fait que dans le cas d'une mémoire-tampon (P-SP) ayant une capacité qui correspond à la capacité de mémorisation de plusieurs unités de mémoire (SP-E) de la mémoire de base (B-SP) et avec une subdivision en des unités de mémorisation de grandeur correspondante, des données pour des unités de mémorisation différentes (SP-E) de la mémoire de base (B-SP) sont ordonnées dans la mémoire-tampon (P-SP) par répartition sur différentes unités de mémoire, et qu'une transmission à la mémoire de base (B-SP) a lieu lorsqu'une unité de mémoire dans la mémoire-tampon (B-SP) est remplie.

8. Mémoire associative hybride selon l'une des revendications 1 à 7, caractérisée par le fait que pour la protection des données dans la mémoire de base (B-SP), les sections de mémoire sont, par unité de mémoire (SP-E), subdivisées en groupes de protection et sont ordonnées, dans chaque groupe, en forme de matrice, que les contenus des sections de mémoire ainsi ordonnées sont soumises, avant leur mémorisation dans la mémoire de base (B-SP) à une protection croisée de parité (par S-GEN), que les données de sécurité ainsi obtenues (PW1, PW2) sont également mémorisées dans la mémoire de base (B-SP) et que les données qui sont lues dans la mémoire de base sont, avant transmission à la surface associative (AM/OP) contrôlée par (S-PR), à l'aide des données de protection (PW1, PW2) et sont, dans la mesure du possible, corrigées (par D-K).

9. Mémoire associative hybride selon la revendication 8, caractérisée par le fait que chacune des sections de mémoire qui forme une ligne (Zn), forme un groupe de protection et que les données de protection respectives ainsi obtenues (PW1, PW2) sont respectivement ajoutées à la ligne associée.

10. Mémoire associative hybride selon la revendication 8 ou 9, caractérisée par le fait que pour la correction d'erreurs simples, le contenu des sections de mémoire qui ont été reconnues de façon univoque par les données de protection (PW1, PW2) comme étant perturbées sont inversées (par KS).

FIG 1

# FIG 2

# FIG 3

# FIG 4

# FIG 5

## FIG 6

T-SP····

B1

B8

PW1

PW2

PG1

PG8

Zn

PG

P-SP

## FIG 7

| A | B | C | D | E | F | G | H | PW1

B1

B8

| A | B | C | D | E | F | G | H | PW2

# FIG 8